# EUROPEAN PATENT SPECIFICATION

(11) **EP 3 670 994 B1**
(45) Date of publication and mention of the grant of the patent: **28.09.2022**
(21) Application number: 18857461.0
(22) Date of filing: 22.08.2018
(51) Int. Cl.: F16L 53/70, F16L 57/02, G21D 1/00

(54) **METHOD FOR SETTING COOLING TEMPERATURE FOR METAL WALL SECTION AND METHOD FOR COOLING METAL WALL SECTION**
VERFAHREN ZUM EINSTELLEN DER KÜHLTEMPERATUR FÜR EINEN METALLWANDABSCHNITT UND VERFAHREN ZUM KÜHLEN EINES METALLWANDABSCHNITTS
PROCÉDÉ DE RÉGLAGE DE TEMPÉRATURE DE REFROIDISSEMENT DE PARTIE DE PAROI MÉTALLIQUE ET PROCÉDÉ DE REFROIDISSEMENT DE PARTIE DE PAROI MÉTALLIQUE

(30) Priority: 22.09.2017 JP 2017182625
(43) Date of publication of application: 24.06.2020
(73) Proprietor: Mitsubishi Power, Ltd., Yokohama-shi, Kanagawa 220-8401 (JP)
(72) Inventor: KATO, Chikako, Tokyo 108-8215 (JP); WATANABE, Daigo, Tokyo 108-8215 (JP); SAKATA, Fumitoshi, Yokohama-shi Kanagawa 220-8401 (JP); MATSUO, Takeshi, Tokyo 108-8215 (JP); URASHITA, Yasutaka, Tokyo 108-8215 (JP); OHYAMA, Hiroyuki, Yokohama-shi Kanagawa 220-8401 (JP)
(74) Representative: Hoffmann Eitle
(86) International application number: PCT/JP2018/030901
(87) International publication number: WO 2019/058852

(56) References cited:
- EP-A1- 2 975 314
- JP-A- H0 666 409
- JP-B2- 5 701 349

## Description

### [Technical Field]

The present invention relates to a method for setting a cooling temperature of a metal wall and a method for cooling the metal wall, the methods intended to cool a pipe and a pressure vessel used in a plant, such as a thermal power plant, a nuclear power plant, and a chemical power plant.

### [Background Art]

For example, a thermal power plant is provided with a pipe through which steam heated in a boiler is transported to a steam turbine. The pipe is a metal pipe through which high-temperature, high-pressure steam flows and is therefore in a high-temperature environment heated by the steam. When the metal pipe is used for a long period in the environment described above, creep damage occurs and progresses, resulting in creep voids, which connect with each other, resulting in cracks, which may eventually lead to breakage.

To prevent such breakage of the pipe, nondestructive inspection is regularly performed, and the degree of growth of the creep voids is analyzed to derive the degree of creep damage for evaluation of a remaining life (creep life) of the metal pipe. In this case, since a welded section of a metal pipe typically has a higher creep damage risk than a base material section of the metal pipe, the welded section is a primary inspection target location. When the creep damage risk in the period before the next regular inspection is not negligible as a result of the nondestructive inspection, the operation temperature of the entire plant is lowered to lower the metal temperature of the metal pipe and the creep damage risk in some cases. Lowering the operation temperature of the entire plant, however, undesirably lowers the operation efficiency of the plant.

In the case where the creep damage risk in the period before the next regular inspection is not negligible as described above, there has been a proposed approach for lowering the creep damage risk by partially cooling the outer surface of the metal pipe to lower the metal temperature (PTL 1) .

### [Citation List]

### [Patent Literature]

[PTL 1]
the Publication of Japanese Patent No. 5701349

### [Summary of Invention]

### [Technical Problem]

PTL 1 discloses that the outer surface of the metal pipe is cooled to lower the creep damage but contains no findings of the degree of cooling that can provide a desired creep life. Further, thermal stress induced by a temperature difference in the plate thickness direction is likely to damage the pipe (such as plastic deformation of pipe), and PTL 1 discloses no measures for preventing the damage due to the thermal stress. One more example of a procedure of cooling a metal pipe can be found in EP 2 975 314 A1.

In view of the circumstances described above, an object of the present disclosure is to provide a method for setting a cooling temperature of a metal wall and a method for cooling the metal wall, which can provide a desired creep life.

### [Solution to Problem]

To achieve the object described above, a method for setting a cooling temperature of a metal wall and a method for cooling the metal wall according to some embodiments of the present invention employ the following solutions.

That is, a method for setting a cooling temperature of a metal wall according to the present invention includes a step of computing a cooling temperature-stress relationship representing a relationship between a post-cooling temperature of an outer surface of the metal wall that partitions pressurized fluid and stress acting on a cooled portion and a post-cooling temperature computation step of computing a target post-cooling temperature of the outer surface that provides a target creep life of the metal wall based on the cooling temperature-stress relationship and an equivalent life line representing a relationship between a temperature and stress that provides the target creep life, and the cooling temperature-stress relationship is computed in consideration of a thickness of the metal wall in the cooling temperature-stress relationship computation step.

When a predetermined creep life is not provided, for example, cooling the outer surface of the metal wall, which is a pipe, does not necessarily provide the predetermined creep life because thermal stress induced by the temperature distribution in the thickness direction of the metal wall is superimposed. The target creep life can be reliably provided by computing the target post-cooling temperature in consideration of the plate thickness of the metal wall.

Further, in some embodiments of the present invention, the target post-cooling temperature is computed so that the stress acting on the cooled portion in a temperature condition after the cooling is smaller than or equal to stress on the equivalent life line at the temperature in the post-cooling temperature computation step.

Since the target post-cooling temperature is computed so that the stress acting on the cooled portion is smaller than or equal to the stress on the equivalent life line, the target creep life can be reliably provided.

Further, in some embodiments of the present invention, in the post-cooling temperature computation step, a temperature width ΔT0 that causes no decrease in creep life after the outer surface is cooled is computed, and the target post-cooling temperature is computed so as to exceed the temperature width ΔT0.

The present inventors have conducted studies and found that even after the outer surface of the metal wall is cooled, there are areas where the creep life rather increases in a predetermined temperature width range. In view of the finding, the temperature width that causes no decrease in the creep life is computed, and the target post-cooling temperature is computed so as to exceed the temperature width.

Further, in some embodiments of the present invention, a post-cooling temperature at which the metal wall is plastically deformed by the cooling of the outer surface is computed as a lower limit temperature of the target post-cooling temperature.

When the outer surface of the metal wall is excessively cooled, the thermal stress increases, resulting in plastic deformation of the metal wall. The post-cooling temperature of the outer surface in this case is computed as the lower limit temperature of the target value. Breakage and other types of failure due to the plastic deformation of the metal wall can thus be prevented.

As the temperature that shows plastic deformation, for example, a temperature that shows stress greater than yield stress can be used. Instead, shakedown strength that shows progressive deformation may be used.

Further, in some embodiments of the present invention, the metal wall is a pipe, and the method further comprises a correction step of correcting the target post-cooling temperature in accordance with a temperature distribution in a pipe axial direction and/or a pipe circumferential direction of the pipe.

When a temperature distribution occurs in the pipe axial direction and/or the pipe circumferential direction of the pipe, thermal stress in the pipe axial direction and/or the pipe circumferential direction is superimposingly induced in accordance with the temperature distribution. Correcting the target post-cooling temperature in consideration of the thermal stress allows the target creep life to be reliably provided.

Further, in some embodiments of the present invention, the method includes a differential stress computation step of computing differential stress corresponding to a difference between stress corresponding to the target post-cooling temperature and stress that provides the target creep life at the target post-cooling temperature and a temperature distribution setting step of setting the temperature distribution in such a way that thermal stress induced by the temperature distribution in the pipe axial direction and/or the pipe circumferential direction of the pipe is smaller than the differential stress.

Since the target post-cooling temperature provides the target creep life, predetermined differential stress is present between the stress corresponding to the target post-cooling temperature and the stress that provides the target creep life. Even when stress corresponding to the differential stress is further added, the target creep life is still provided. Therefore, even when a temperature distribution occurs in the pipe axial direction and/or the pipe circumferential direction of the pipe so that thermal stress is induced, the stress corresponding to the differential stress can be permitted. Setting a temperature distribution in such a way that the thermal stress induced by the temperature distribution is smaller than the differential stress allows the target creep life to be provided. It is therefore unnecessary to correct the target post-cooling temperature in accordance with the temperature distribution that occurs in the pipe, but the temperature distribution only needs to be set, whereby cumbersome operation can be avoided.

Examples of a method for setting the temperature distribution may include changing the flow direction and/or flow rate of a cooling medium, providing cooling fins, and changing the shape of the area to be cooled.

Further, in some embodiments of the present invention, the method includes any of the aforementioned methods for setting a cooling temperature of a metal wall and a cooling step of cooling the metal wall to the target post-cooling temperature.

### [Advantageous Effects of Invention]

Since the thermal stress induced by the temperature distribution in the thickness direction of the metal wall in the case where the outer surface of the metal wall is cooled is taken into consideration, a desired creep life can be provided.

### [Brief Description of Drawings]

[Fig. 1]

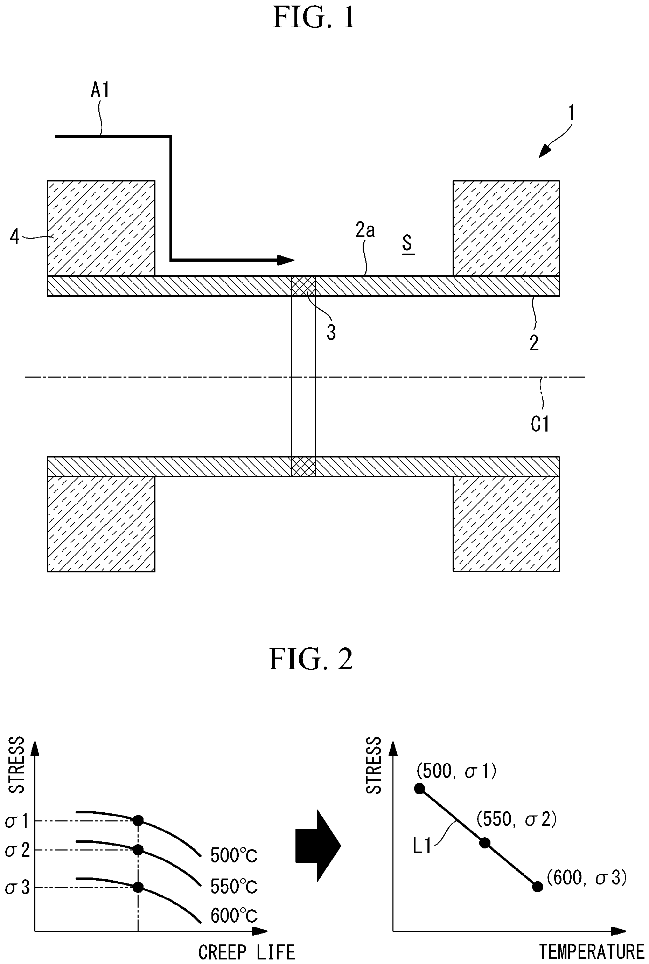

   Fig. 1 is a longitudinal sectional view showing a pipe cooling structure to which a pipe cooling method according to a first embodiment is applied.
[Fig. 2]
   Fig. 2 shows graphs illustrating a method for obtaining the relationship of the temperature and stress with respect to a predetermined creep life.
[Fig. 3]

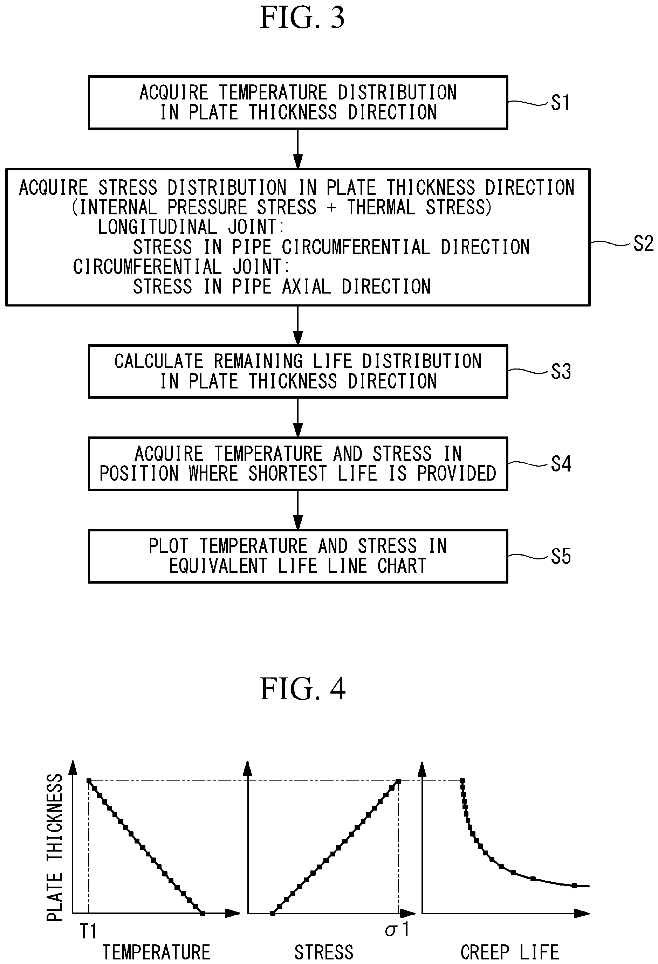

   Fig. 3 is a flowchart showing a method for indicating a remaining life of a predetermined pipe on an equivalent life line chart.
[Fig. 4]
   Fig. 4 show graphs illustrating a temperature and stress that provide the shortest life.
[Fig. 5]

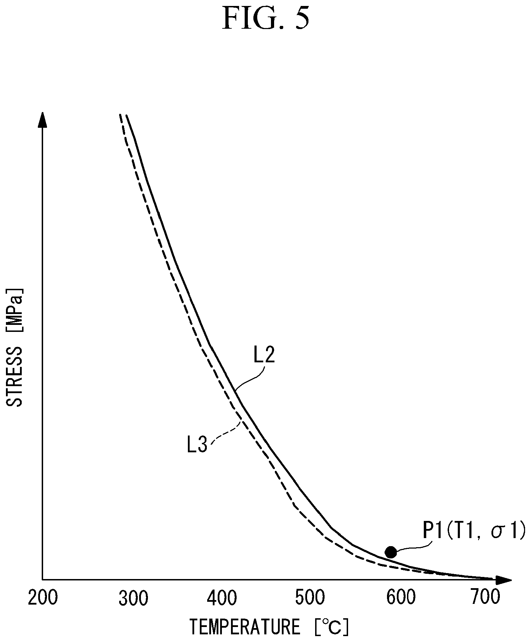

   Fig. 5 shows graphs each illustrating an equivalent life line chart.
[Fig. 6]

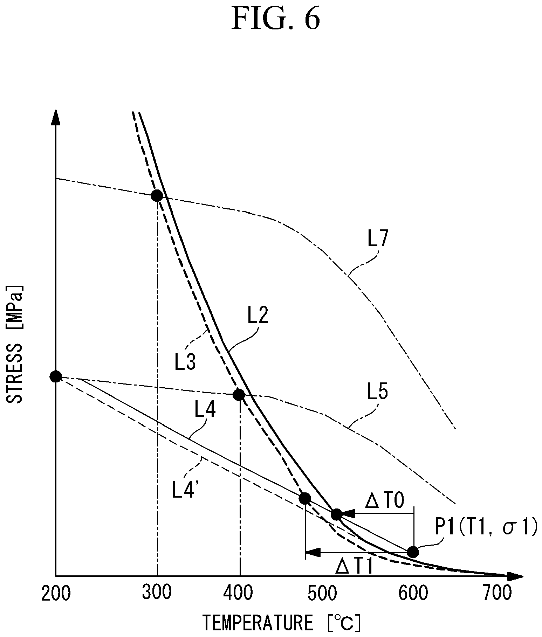

   Fig. 6 shows graphs illustrating a change in stress induced when the pipe is cooled on the equivalent life line chart.
[Fig. 7]

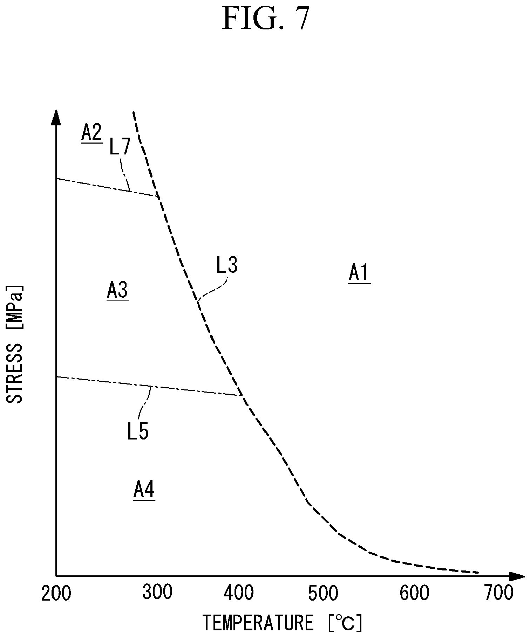

   Fig. 7 is a map for creep life management using the equivalent life line chart.
[Fig. 8]

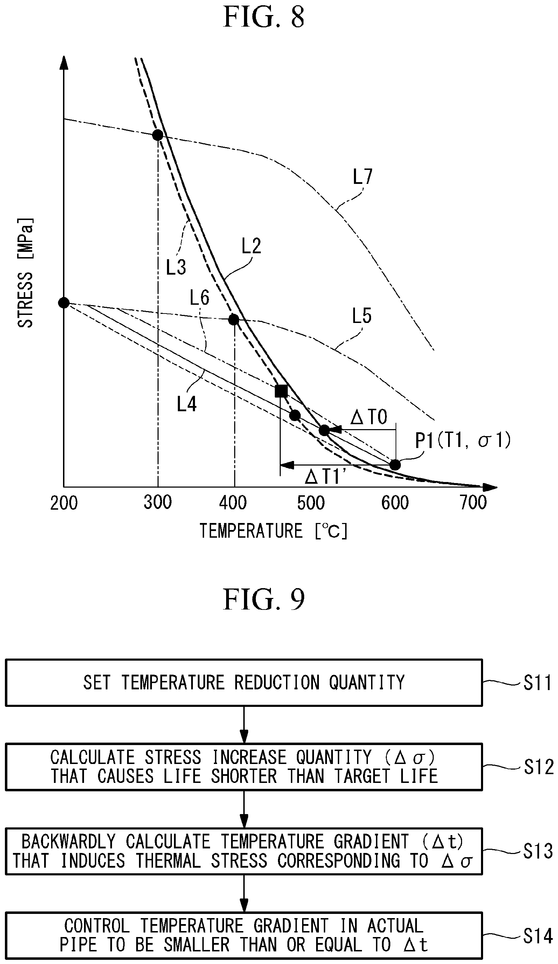

   Fig. 8 shows graphs illustrating the equivalent life line chart in a pipe cooling method according to a third embodiment.
[Fig. 9]
   Fig. 9 is a flowchart for describing the third embodiment.
[Fig. 10]

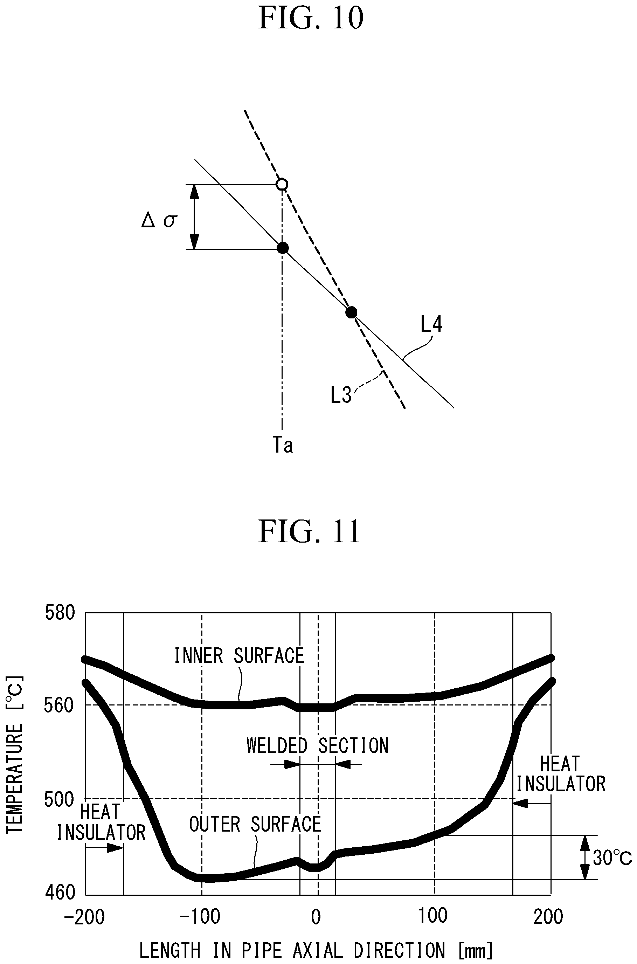

   Fig. 10 is an enlarged view of the graphs illustrating the equivalent life line chart in the pipe cooling method according to the third embodiment.
[Fig. 11]
   Fig. 11 shows graphs illustrating the temperature distribution of the outer surface of the pipe according to an example.

### [Description of Embodiments]

Embodiments according to the present invention will be described below with reference to the drawings.

### [First embodiment]

Fig. 1 shows a pipe cooling structure 1, which partially cools a pipe (metal wall) that is a cooling target. A heat insulator 4 is disposed around the outer circumference of a pipe 2. A welded section 3 is formed as part of the pipe 2 in the circumferential direction thereof (pipe circumferential direction), and part of the heat insulator 4 is removed in an area including the welded section 3 to form a space S. The space S exposes an outer surface 2a of the pipe 2 to the outer environment (atmosphere). In a case where the welded section is formed in the pipe axial direction, the heat insulator 4 is partially removed so that an area along the welded section formed in the pipe axial direction is exposed.

The pipe 2 is a circular pipe having a center axial line C1 and is made of a metal, such as low alloy steel (such as 1.25Cr-Mo steel or 2.25Cr-Mo steel), high-Cr steel (9Cr steel), austenitic steel (SUS316), and Ni-based alloy steel (HR6W). The pipe 2 is, for example, a primary steam pipe or a reheat steam pipe used in a boiler in a thermal power plant, and high-temperature superheated steam (pressurized fluid) having a temperature higher than or equal to 500°C but lower than or equal to 700°C flows through the pipe. The pressure in the pipe 2 is assumed to be higher than or equal to 1 MPa but lower than or equal to 50 MPa. The pressure outside the pipe 2 is assumed to be the atmospheric pressure. The outer diameter of the pipe 2 is assumed to be greater than or equal to 200 mm but smaller than or equal to 1000 mm, and the plate thickness of the pipe 2 is assumed to be greater than or equal to 10 mm but smaller than or equal to 200 mm.

In a case where a welded section 3 having a high creep breakage risk has been identified by nondestructive inspection, such as magnetic particle testing (MT inspection) and penetrant testing (PT inspection), or creep-breakage-based evaluation of the remaining life of the pipe 2 using nondestructive evaluation or analysis, and it is determined that the pipe 2 cannot be continuously used in normal usage, the heat insulator 4 that covers the welded section 3 of the pipe 2 having a high creep breakage risk is removed, and a cooling medium, such as air, is externally guided to the outer surface 2a of the pipe 2, for example, as indicated by the arrow A1 to locally lower the outer surface temperature and provide a desired target creep life.

A method for determining a cooling temperature of the outer surface 2a of the pipe 2 when the pipe cooling structure 1 described above is used will next be described.

Fig. 2 shows a method for obtaining the relationship of the temperature and stress with respect to a predetermined creep life. The creep life determined by the creep breakage is governed primarily by the material, temperature, and stress. That is, in a case where the material is the same, the stress is determined depending on each temperature with respect to the creep life, as shown by the left graph in Fig. 2. The left graph in Fig. 2 is rearranged so that the horizontal axis represents the temperature and the vertical axis represents the stress for a predetermined creep life (target creep life, for example) to provide a curve L1 representing a creep life curve (target creep life computation step), as shown by the right graph in Fig. 2. The line L1 of the right graph represents the temperature and pressure that provide the predetermined creep life. The right graph is hereinafter referred to as an equivalent life line chart.

The stress is the sum of thermal stress and internal pressure stress.

The thermal stress is calculated as follows: The temperature distribution in the plate thickness direction is calculated in consideration of the conditions of the steam in the pipe (such as steam temperature and heat transfer rate) and cooling conditions outside the pipe (such as ambient temperature, heat transfer rate, and radiation rate). The thermal stress is then calculated based, for example, on the resultant temperature distribution and a thermal stress formula for a cylinder.

The internal pressure stress is calculated based, for example, on a thick cylinder formula by using the steam pressure.

The thermal stress and the internal pressure stress determined as described above are then summed to calculate the sum. When a shortest life location (typically, outer surface on which tensile stress acts) is called an evaluation position, stress acting on a cooled portion is determined based on the relationship between the stress in the plate thickness direction and the temperature.

The thermal stress and the internal pressure stress may be calculated by using the predetermined formulae described above or may be numerically calculated, for example, by using FEM.

The creep life is specifically the creep life of the welded section 3, which is the weakest portion. The creep life of the welded section 3 is determined by acquiring a breakage life in a strength experiment in which predetermined stress is induced in a rod test piece having a uniform temperature and formulating a life evaluation equation by using a Larson-Miller parameter (function of temperature and life). A creep equivalent life line can be set in advance by using the formulated life evaluation equation. For example, to determine a one-hundred-thousand-hour equivalent life line (99% lower limit line), the stress corresponding to one hundred thousand hours is calculated depending on each temperature, and an equation representing the relationship between the temperature and the stress is output as a graph of the equivalent life line chart.

A method for indicating the remaining life of a predetermined pipe on the equivalent life line chart described with reference to Fig. 2 will be described with reference to Fig. 3.

The temperature distribution in the plate thickness direction of the pipe 2 at the time of operation or design is first acquired (step S1). The temperature to be used is a value acquired with a temperature sensor, such as a thermocouple, or a temperature estimated at the time of design. The pipe 2 with which the heat insulator 4 is covered has a roughly flat temperature distribution in the plate thickness direction (that is, temperature of outer surface is roughly equal to temperature of inner surface). A temperature distribution in the plate thickness direction occurs in the pipe 2 off which the heat insulator 4 has been striped and which is exposed into the space S, as shown in Fig. 1.

The stress distribution in the plate thickness direction is then acquired (step S2). The stress is superposition of the internal pressure stress induced by the pressure of the steam flowing through the pipe 2 and the thermal stress induced by the temperature distribution in the plate thickness direction. In a case where the welded section 3 is a circumferential joint present in the circumferential direction of the pipe 2, as shown in Fig. 1, stress in the pipe axial direction of the pipe 2 is a large factor that affects the creep life, requiring examination of the stress in the pipe axial direction. On the other hand, in a case where the welded section is a longitudinal joint present in the pipe axial direction of the pipe 2, stress in the pipe circumferential direction of the pipe 2 is a large factor that affects the creep life, requiring examination of the stress in the pipe circumferential direction.

In step S3, a remaining life distribution in the plate thickness direction of the pipe 2 is calculated based on the temperature obtained in step S1 and the stress obtained in step S2. The remaining life can be obtained as a creep life from the left graph in Fig. 2.

In step S4, a temperature T1 and stress σ1 in the position where the shortest life is provided are then acquired. Fig. 4 shows the temperature T1 and the stress σ1. In Fig. 4, the vertical axis represents the plate thickness, with the upper side of the vertical axis representing the outer surface of the pipe 2 and the lower side of the vertical axis representing the inner surface of the pipe 2. The horizontal axis represents the temperature, the stress, and the creep life from left to right. The temperature of the pipe 2 on the side facing the inner surface thereof is high because high-temperature steam flows along the inner surface, and the temperature of the pipe 2 on the side facing the outer surface thereof is low because the outer surface faces the atmosphere and is equal to T1, as seen from Fig. 4. The stress in the pipe 2 on the side facing the outer surface thereof is tensile thermal stress, and the stress in the pipe 2 on the side facing the inner surface thereof is compressive thermal stress because the outer surface of the pipe 2 has a low temperature and the inner surface of the pipe 2 has high temperature. Superposition of the internal pressure stress and the thermal stress shows that the stress is maximized at the outer surface of the pipe 2 and is equal to the stress σ1. The creep life is the shortest at the outer surface where the stress is maximized. The position where the life is the shortest is therefore the outer surface 2a of the welded section 3 of the pipe 2.

In step S5, the temperature T1 and the stress σ1, which are obtained in step S4 and provide the shortest life, are plotted in the equivalent life line chart.

Fig. 5 shows a plotted point P1 plotted in step S5. In Fig. 5, a curve L2 drawn in the form of a solid line represents the creep life until the next regular inspection, and a curve L3 drawn in the form of a broken line represents a target creep life, that is, the creep life with a predetermined safety factor taken into consideration. The curves L2 and L3 each have a downwardly convex shape.

The plotted point P1 is shifted rightward and upward from the creep life expressed by the curve L2 (that is, toward high temperature side and large stress side), as shown in Fig. 5, which means that the creep life does not last until the next regular inspection.

The temperature at the plotted point P1 is about 600°C. The temperature of 600°C is the average of the values from 500°C to 700°C, which is a target temperature range of the high-temperature superheated steam, and is therefore a representative value of the range. The following description will be made on the assumption that the temperature at the plotted point P1 is about 600°C.

To extend the creep life at the plotted point P1, the cooled portion of the outer surface of the pipe 2 is partially cooled, as shown in Fig. 1.

Fig. 6 shows the temperature and stress in the case where the outer surface of the pipe 2 is cooled. When the outer surface of the pipe 2 is cooled, the temperature of the pipe 2 decreases, but the temperature difference in the plate thickness direction of the pipe 2 increases, resulting in an increase in the stress as a whole because of an increase of the thermal stress, as indicated by a curve L4 in Fig. 6. The gradient of the curve L4 changes with the plate thickness of the pipe and how the pipe is restricted.

In the range where the temperature changes from the plotted point P1 to a temperature width ΔT0, the temperature and stress are present in the area above the curve L2 representing the creep life until the next regular inspection. This means that the creep life is not extended but is rather shortened. Therefore, to cool the outer surface of the pipe 2, a target post-cooling temperature needs to be specified so as to exceed the temperature width ΔT0.

The temperature width ΔT0 changes in accordance with the shape of the curve L2 and the gradient of the curve L4 and is typically 50°C or higher under the aforementioned conditions of the pipe 2. The target post-cooling temperature of the outer surface of the pipe 2 is therefore set at a value higher than or equal to the temperature width ΔT0, specifically 50°C or higher with respect to the pre-cooling temperature.

When the temperature changes from the plotted point P1 beyond the temperature width ΔT1, the target creep life indicated by the curve L3 is provided. The target post-cooling temperature to which the pipe 2 is cooled is therefore specified so as to exceed the temperature width ΔT1.

On the other hand, when the outer surface of the pipe 2 is excessively cooled, the thermal stress increases, the stress in the pipe 2 exceeds the yield point thereof, resulting in plastic deformation, which could lead, for example, to progressive deformation or fatigue damage associated with start and stop of the plant. The lower limit of the target post-cooling temperature is specified so as not to exceed the maximum stress indicated by a curve L5 drawn in the form of the dashed line in Fig. 6.

The maximum stress indicated by the curve L5 shown in Fig. 6 is, for example, yield strength. The reason why the curve L5 bends is that the curve L5 reflects the dependency of the yield strength on the temperature. In the case where the curve L5 bends as shown in Fig. 6, the temperature at the intersection of the curve L5 and the curve L4, which represents the lower limit of the target cooling temperature, cannot be determined by simple calculation, and is preferably determined while checking of figures and other factors (will be described later with reference to Fig. 7).

For example, the lower limit value of the target post-cooling temperature is set at 400°C at the intersection of the curve L5 and the curve L3. The temperature of 400°C at the intersection of the curve L5 and the curve L3 represents the temperature at which the stress resulting in the target creep life of the pipe 2 is equal to the yield strength. To provide the target creep life, the outer surface of the pipe 2 needs to be cooled so that the temperature of the outer surface falls within the area on the left of the curve L3. When the lower limit value of the target post-cooling temperature is set at 400°C at the intersection of the curve L5 and the curve L3, the induced stress can be reliably smaller than or equal to the values on the curve L5 (lower than or equal to yield strength) with the target creep life provided (in area on left of curve L3). That is, the influence of the yield strength does not need to be considered, and the target post-cooling temperature can be securely set in consideration only of whether or not the target creep life is provided.

The lower limit of the target post-cooling temperature can be selected by specifying a predetermined condition in place of use of the intersection of the yield stress, such as the curve L5, and the curve L3.

First of all, shakedown strength is used to select a lower limit value of the target post-cooling temperature. The shakedown refers to a phenomenon representing progressive deformation caused by predetermined stress, and the stress that causes the shakedown is called shakedown strength. The shakedown strength is, for example, twice the yield stress. The lower limit value of the target post-cooling temperature using the shakedown strength is, for example, 300°C at the intersection of a curve L7, which represents the shakedown strength, and the curve L3. The effect provided by using the shakedown strength replaces the effect provided by using the yield strength described above.

The maximum stress (strength) may be fatigue strength other than the shakedown strength and the yield strength.

Second, the lower limit value of the target post-cooling temperature is set at 200°C at the intersection of a curve L4', which is provided so as to be parallel to the curve L4 and come into contact with the curve L2, and the curve L5. The curve L4 is preferably selected so as to be a curve having the smallest gradient (that is, close to horizontal line) among curves examined under a variety of temperature-stress conditions. The thus obtained curve L4' can be selected as a limit value as the lower limit of the target post-cooling temperature.

After the computation described above, the target post-cooling temperature of the pipe 2 is specified so as to exceed the temperature width ΔT1 (post-cooling temperature computation step).

As described above, the target post-cooling temperature of the outer surface of the pipe 2 is set at higher than or equal to 200°C, preferably higher than or equal to 300°C, more preferably higher than or equal to 400°C.

Further, the temperature difference between the outer surface of the pipe 2 before the cooling and the outer surface of the pipe 2 after the cooling is set at lower than or equal to 400°C, preferably lower than or equal to 300°C, more preferably lower than or equal to 200°C. The reason why the temperature difference is set as described above is as follows:
To allow the thermal stress induced by the temperature difference in the plate thickness direction of the pipe 2 to exceed the yield strength, a temperature difference higher than or equal to 400°C is required. Therefore, as the maximum range that can prevent plastic deformation of the pipe 2, the temperature difference between the outer surface before the cooling and the outer surface after the cooling (corresponding to temperature difference in plate thickness direction) is set at lower than or equal to 400°C.

Further, as a range that can prevent plastic deformation of the pipe 2 with tolerance, the temperature difference between the outer surface of the pipe 2 before the cooling and the outer surface of the pipe 2 after the cooling is set at lower than or equal to 300°C.

On the other hand, when the temperature of the steam flowing through the pipe 2 ranges from 500 to 700°C, the heat transfer rate between the steam and the pipe 2 ranges from 500 to 3000 w/m²k, the ambient temperature ranges from 20 to 100°C, the heat transfer rate between the ambient air and the pipe 2 ranges from 20 to 300 w/m²k, and the radiation rate ranges from 0.5 to 1.0, the temperature difference in the plate thickness direction of the pipe 2 is 200°C or lower. The thermal stress induced by the temperature difference in the plate thickness direction of the pipe 2 does not exceed the yield strength of the material when the temperature difference falls within the range described above. For example, when the temperature difference in the plate thickness direction of the pipe 2 is 90°C, the thermal stress is 120 MPa.

Therefore, the plastic deformation of the pipe 2 can be prevented with further tolerance, and the temperature difference between the outer surface before the cooling and the outer surface after the cooling is set at 200°C or lower as a range that allows the cooling by using a simple, practical method based on ambient air contact.

Fig. 7 is a map for creep life management using the equivalent life line chart obtained as described above. The map for creep life management may be shown on a display apparatus, such as display.

As shown in Fig. 7, the creep life until the next regular inspection is not provided in an area A1 shifted rightward and upward from the curve L3, which is the target creep life curve, and the area A1 cannot therefore be used (NG).

Progressive deformation occurs in an area A2, which is on the left of the curve L3 but is above the curve L7 representing the shakedown strength, and the area A2 is therefore NG.

In an area A3, which is below the area A2, above the curve L5, and on the left of the curve L3, the outer surface 2a of the pipe 2 is plastically deformed, but no progressive deformation occurs, and the area A3 can therefore be conditionally used (conditionally OK).

In an area A4, which is below the curve L5 and on the left of the curve L3, the creep life until the next regular inspection is provided and no plastic deformation occurs, the area A4 can therefore be used (OK).

The computation described above may be performed by using an information processor. The information processor is formed, for example, of a CPU (central processing unit), a RAM (random access memory), a ROM (read only memory), and a computer readable storage medium. A series of processes for achieving a variety of functions are stored, for example, in the storage medium in the form of a program, and the CPU reads out the program, for example, into the RAM and processes and computes information to achieve the variety of functions. The program may be installed in advance in the ROM or another storage medium, provided in the form of a program stored in a computer readable storage medium, or distributed via communication means in a wired or wireless manner. The computer readable storage medium is, for example, a magnetic disk, a magneto-optical disk, a CD-ROM, a DVD-ROM, and a semiconductor memory.

The configuration described above provides the following operational effects:
When the predetermined creep life is not provided (refer to point P1 plotted in Fig. 6), cooling the outer surface of the pipe 2 does not necessarily provide the predetermined creep life because thermal stress induced by the temperature distribution in the plate thickness direction of the pipe 2 is superimposed. In the present embodiment, since the target post-cooling temperature is computed in consideration of the plate thickness of the pipe 2, the target creep life can be reliably provided.

The present inventors have found that even after the outer surface of the pipe 2 is cooled, there are areas where the creep life rather decreases in a range in Fig. 6 where the temperature width is smaller than or equal to ΔT0. In view of the finding, the temperature width ΔT0 that causes no increase in the creep life is computed, and the target post-cooling temperature is computed so as to exceed the temperature width ΔT0.

When the outer surface of the pipe 2 is excessively cooled, the thermal stress increases, resulting in plastic deformation of the pipe (see dashed line in Fig. 6). The post-cooling temperature of the outer surface in this case is computed as the lower limit temperature of the target value. Breakage and other types of failure due to the plastic deformation of the pipe 2 can thus be prevented.

### [Second embodiment]

A second embodiment will next be described.

The present embodiment differs from the first embodiment in that the temperature distribution in the pipe axial direction of the pipe 2 is taken into consideration, and the present embodiment is the same as the first embodiment in terms of the other points. The difference from the first embodiment will therefore be described below.

Removal of the heat insulator 4 on only a part in the pipe axial direction of the pipe 2, as shown in Fig. 1, results in a temperature distribution in the pipe axial direction. When a temperature distribution occurs in the pipe axial direction, the temperature distribution also induces thermal stress.

Fig. 8 shows graphs illustrating the thus induced thermal stress. The stress increases by the magnitude of the superimposed thermal stress induced by the temperature distribution in the pipe axial direction as indicated by a curve L6 shown in Fig. 8 as compared with the curve L4, which is derived with no consideration of the thermal stress. The target post-cooling temperature is set so as to exceed the temperature width ΔT0 based on the curve L4 in the first embodiment, whereas the target post-cooling temperature is corrected so as to exceed a temperature width ΔT1' specified by the curve L6 (correction step).

The target creep life can thus be reliably provided.

The thermal stress included by the temperature distribution in the pipe axial direction may be replaced with thermal stress induced by a temperature distribution in the pipe circumferential direction or the thermal stress induced by the temperature distributions in the pipe axial direction and the pipe circumferential direction.

### [Third embodiment]

A third embodiment will next be described.

In the second embodiment, the target post-cooling temperature is corrected in accordance with the temperature distribution in the pipe axial direction and/or the pipe circumferential direction. In this case, it is necessary to grasp the temperature distribution that occurs in the pipe 2 in the pipe axial direction or the pipe circumferential direction. In contrast, the present embodiment provides a simpler cooling method in which the temperature distribution in the pipe axial direction or the pipe circumferential direction is restricted to a predetermined range.

A temperature reduction quantity is set in step S11, as shown in Fig. 9. The temperature reduction quantity means the temperature difference between the temperature at the plotted point P1 to the target post-cooling temperature shown in Fig. 8. The temperature reduction quantity is therefore greater than the temperature width ΔT1' from the plotted point P1, and a reference character Ta in Fig. 10 shows the target post-cooling temperature determined by the temperature reduction quantity. Fig. 10 is an enlarged view showing an area where the curves L3 and L4 shown in Fig. 8 intersect each other.

A stress increase quantity that causes a creep life shorter than the target creep life is calculated in step S12, as shown in Fig. 9. Specifically, differential stress Δσ between the stress indicated by the curve L4 at the target post-cooling temperature Ta and the stress indicated by the curve L3 at the target post-cooling temperature Ta (stress in no consideration of thermal stress induced by temperature distributions in pipe axial direction and pipe circumferential direction) is calculated (differential stress computation step), as shown in Fig. 10.

A temperature gradient Δt, which induces thermal stress corresponding to the differential stress Δσ obtained in step S12, is computed in step S13.

In the case where the welded section 3 is a circumferential joint present in the circumferential direction of the pipe 2, as shown in Fig 1, a change in the temperature of the pipe 2 in the pipe axial direction is preferably 50°C or lower over the range of ±100 mm with the welded section 3 as a center. On the other hand, in the case where the welded section is a longitudinal joint present in the pipe axial direction of the pipe 2, a change in the temperature at the cooled portion of the pipe 2 in the pipe circumferential direction is preferably 50°C or lower.

The cooling of the pipe 2 is then controlled in step S14 so that the temperature gradient in the cooling is not greater than the temperature gradient Δt obtained in step S13 (temperature distribution setting step). Examples of the cooling control method may include changing the flow direction and/or flow rate of cooling air (cooling medium), providing cooling fins, and changing the shape of the area to be cooled (changing area off which heat insulator 4 is stripped, for example).

The configuration described above provides the following operational effects:
Setting the temperature distribution in the pipe axial direction and/or the pipe circumferential direction in such a way that the thermal stress induced by the temperature distribution is smaller than the differential stress Δσ allows the target creep life to be provided. It is therefore unnecessary to correct the target post-cooling temperature in accordance with the temperature distribution that occurs in the pipe 2, unlike in the second embodiment, but the temperature distribution only needs to be set, whereby cumbersome operation can be avoided.

### [Example 1]

Fig. 11 shows an example of the temperature of the outer surface of the pipe 2 after the pipe 2 is cooled by applying any of the embodiments described above. The present example relates to a circumferential joint including the welded section 3 present in the circumferential direction of the pipe 2, as shown in Fig. l, and the heat insulator 4 in an area ranging from -180 mm to +180 mm including the welded section 3 is partially stripped off, and the exposed area is cooled.

When the operation temperature (that is, steam temperature) is 570°C, the lowest temperature of the outer surface of the pipe 2 is 480°C (>450°C), the temperature difference in the plate thickness direction is 90°C (<200°C), and the temperature difference in the pipe axial direction is 30°C (<50°C) in an area ± 100 mm, which mean that the temperature conditions in any of the embodiments described above are satisfied.

In the embodiments described above, the method for cooling the pipe 2 has been described, but the present invention is not limited thereto, and the embodiments described above are applicable to any metal wall that partitions pressurized fluid, for example, to a pressure vessel.

In the embodiments described above, the description has been made with reference to the case where the temperature of the steam flowing through the pipe 2 is 600°C. Instead, a equivalent life line chart can be created in accordance with the steam temperature from higher than or equal to 500°C to 700°C for a prolonged life of the pipe 2.

### [Reference Signs List]

- 1: Pipe cooling structure
- 2: Pipe
- 2a: Outer surface
- 3: Welded section
- 4: Heat insulator
- S: Space

## Claims

1. A method for setting a cooling temperature of a metal wall (2), the method being **characterized by**:
a step of computing a cooling temperature-stress relationship (L4) representing a relationship between a post-cooling temperature of an outer surface of the metal wall (2) that partitions pressurized fluid and stress acting on a cooled portion; and
a post-cooling temperature computation step of computing a target post-cooling temperature of the outer surface that provides a target creep life of the metal wall based on the cooling temperature-stress relationship and an equivalent life line (L1, L2) representing a relationship between a temperature and stress that provides the target creep life,
wherein the cooling temperature-stress relationship (L4) is computed in consideration of a thickness of the metal wall (2) in the cooling temperature-stress relationship computation step.

2. The method for setting a cooling temperature of a metal wall (2) according to claim 1, wherein the target post-cooling temperature is computed so that the stress acting on the cooled portion in a temperature condition after the cooling is smaller than or equal to stress on the equivalent life line (L1, L2) at the temperature in the post-cooling temperature computation step.

3. The method for setting a cooling temperature of a metal wall (2) according to claim 1 or 2, wherein in the post-cooling temperature computation step, a temperature width ΔT0 that causes no increase in creep life after the outer surface (2a) is cooled is computed, and the target post-cooling temperature is computed so as to exceed the temperature width ΔT0.

4. The method for setting a cooling temperature of a metal wall (2) according to any of claims 1 to 3, wherein a post-cooling temperature at which the metal wall is plastically deformed by the cooling of the outer surface is computed as a lower limit temperature of the target post-cooling temperature.

5. The method for setting a cooling temperature of a metal wall according to any of claims 1 to 4,
wherein the metal wall (2) is a pipe, and
the method further comprises a correction step of correcting the target post-cooling temperature in accordance with a temperature distribution in a pipe axial direction and/or a pipe circumferential direction of the pipe.

6. The method for setting a cooling temperature of a metal wall (2) according to claim 5, further comprising:
a differential stress computation step (S12) of computing differential stress (Δσ) corresponding to a difference between stress corresponding to the target post-cooling temperature (Ta) and stress that provides the target creep life at the target post-cooling temperature (Ta); and
a temperature distribution setting step of setting the temperature distribution in such a way that thermal stress induced by the temperature distribution in the pipe axial direction and/or the pipe circumferential direction of the pipe is smaller than the differential stress( Δσ).

7. A method for cooling a metal wall (2), the method comprising:
the method for setting a cooling temperature of a metal wall (2) according to any of claims 1 to 6; and
a cooling step of cooling the metal wall to the target post-cooling temperature.

## Patentansprüche

1. Verfahren zum Einstellen einer Abkühltemperatur einer Metallwand (2), wobei das Verfahren **gekennzeichnet ist durch**:
einen Schritt des Berechnens einer Abkühltemperatur-Spannungs-Beziehung (L4), die eine Beziehung zwischen einer Nachkühltemperatur einer Außenfläche der Metallwand (2), die unter Druck stehendes Fluid trennt, und einer auf einen gekühlten Abschnitt wirkenden Spannung darstellt; und
einen Nachkühltemperatur-Berechnungsschritt zum Berechnen einer Soll-Nachkühltemperatur der Außenfläche, die eine Soll-Kriechlebensdauer der Metallwand auf der Grundlage der Abkühltemperatur-Spannungs-Beziehung und einer äquivalenten Lebenslinie (L1, L2) bereitstellt, die eine Beziehung zwischen einer Temperatur und einer Spannung darstellt, die die Soll-Kriechlebensdauer bereitstellt,
wobei die Abkühltemperatur-Spannungs-Beziehung (L4) unter Berücksichtigung einer Dicke der Metallwand (2) in dem Berechnungsschritt der Abkühltemperatur-Spannungs-Beziehung berechnet wird.

2. Verfahren zum Einstellen einer Abkühltemperatur einer Metallwand (2) nach Anspruch 1, wobei die Soll-Nachkühltemperatur so berechnet wird, dass die Spannung, die in einem Temperaturzustand nach dem Abkühlen auf den abgekühlten Abschnitt wirkt, kleiner oder gleich der Spannung auf der äquivalenten Lebenslinie (L1, L2) bei der Temperatur in dem Berechnungsschritt der Nachkühltemperatur ist.

3. Verfahren zum Einstellen einer Abkühltemperatur einer Metallwand (2) nach Anspruch 1 oder 2, wobei in dem Berechnungsschritt für die Nachkühltemperatur eine Temperaturbreite ΔT0 berechnet wird, die keine Erhöhung der Kriechlebensdauer nach dem Abkühlen der Außenfläche (2a) bewirkt, und die Soll-Nachkühltemperatur so berechnet wird, dass sie die Temperaturbreite ΔT0 überschreitet.

4. Verfahren zum Einstellen einer Abkühltemperatur einer Metallwand (2) nach einem der Ansprüche 1 bis 3, wobei eine Nachkühltemperatur, bei der die Metallwand durch das Abkühlen der Außenfläche plastisch verformt wird, als untere Grenztemperatur der Soll-Nachkühltemperatur berechnet wird.

5. Verfahren zur Einstellung einer Abkühltemperatur einer Metallwand nach einem der Ansprüche 1 bis 4,
wobei die Metallwand (2) ein Rohr ist, und
wobei das Verfahren weiter einen Korrekturschritt des Korrigierens der Soll-Nachkühltemperatur gemäß einer Temperaturverteilung in einer axialen Rohrrichtung und/oder einer Rohrumfangsrichtung des Rohrs umfassst.

6. Verfahren zum Einstellen einer Abkühltemperatur einer Metallwand (2) nach Anspruch 5, weiter umfassend:
einen Differenzspannungs-Berechnungsschritt (S12) zum Berechnen einer Differenzspannung (Δσ), die einer Differenz zwischen der Spannung, die der Soll-Nachkühltemperatur (Ta) entspricht, und der Spannung, die die Sollkriechlebensdauer bei der Soll-Nachkühltemperatur (Ta) bereitstellt, entspricht; und
einen Temperaturverteilungs-Einstellungsschritt, bei dem die Temperaturverteilung so eingestellt wird, dass die durch die Temperaturverteilung in der axialen Richtung des Rohrs und/oder in der Rohrumfangsrichtung des Rohrs induzierte thermische Spannung kleiner ist als die Differenzspannung (Δσ).

7. Verfahren zum Abkühlen einer Metallwand (2), wobei das Verfahren umfasst:
das Verfahren zum Einstellen einer Abkühltemperatur einer Metallwand (2) nach einem der Ansprüche 1 bis 6; und
einen Abkühlungsschritt, bei dem die Metallwand auf die Soll-Nachkühltemperatur abgekühlt wird.

## Revendications

1. Procédé de réglage d'une température de refroidissement d'une paroi métallique (2), le procédé étant **caractérisé par** :
une étape pour calculer une relation température de refroidissement-contrainte (L4) représentant une relation entre une température de post-refroidissement d'une surface externe de la paroi métallique (2) qui sépare un fluide sous pression et une contrainte agissant sur une portion refroidie ; et
une étape de calcul de température de post-refroidissement pour calculer une température de post-refroidissement cible de la surface externe qui permet d'obtenir une durée de vie en fluage cible de la paroi métallique sur la base de la relation température de refroidissement-contrainte et une longévité équivalente (L1, L2) représentant une relation entre une température et une contrainte qui permet d'obtenir la durée de vie en fluage cible,
dans lequel la relation température de refroidissement-contrainte (L4) est calculée en tenant compte d'une épaisseur de la paroi métallique (2) dans l'étape de calcul de relation température de refroidissement-contrainte.

2. Procédé de réglage d'une température de refroidissement d'une paroi métallique (2) selon la revendication 1, dans lequel la température de post-refroidissement cible est calculée de sorte que la contrainte agissant sur la portion refroidie dans des conditions de température après le refroidissement soit inférieure ou égale à une contrainte sur la longévité équivalente (L1, L2) à la température dans l'étape de calcul de température de post-refroidissement.

3. Procédé de réglage d'une température de refroidissement d'une paroi métallique (2) selon la revendication 1 ou 2, dans lequel dans l'étape de calcul de température de post-refroidissement, une plage de température ΔT0 qui n'entraîne aucune augmentation de la durée de vie en fluage après que la surface externe (2a) est refroidie est calculée, et la température de post-refroidissement cible est calculée de façon à dépasser la plage de température ΔT0.

4. Procédé de réglage d'une température de refroidissement d'une paroi métallique (2) selon l'une quelconque des revendications 1 à 3, dans lequel une température de post-refroidissement à laquelle la paroi métallique est déformée plastiquement par le refroidissement de la surface externe est calculée en tant que température limite inférieure de la température de post-refroidissement cible.

5. Procédé de réglage d'une température de refroidissement d'une paroi métallique selon l'une quelconque des revendications 1 à 4,
dans lequel la paroi métallique (2) est un tuyau, et
le procédé comprend en outre une étape de correction pour corriger la température de post-refroidissement cible en fonction d'une répartition de la température dans une direction axiale de tuyau et/ou une direction circonférentielle de tuyau du tuyau.

6. Procédé de réglage d'une température de refroidissement d'une paroi métallique (2) selon la revendication 5, comprenant en outre :
une étape de calcul de contrainte différentielle (S12) pour calculer une contrainte différentielle (Δσ) correspondant à une différence entre une contrainte correspondant à la température de post-refroidissement cible (Ta) et une contrainte qui permet d'obtenir la durée de vie en fluage cible à la température de post-refroidissement cible (Ta) ; et
une étape de réglage de répartition de la température pour régler la répartition de la température de sorte qu'une contrainte thermique induite par la répartition de la température dans la direction axiale de tuyau et/ou la direction circonférentielle de tuyau du tuyau soit inférieure à la contrainte différentielle (Δσ).

7. Procédé de refroidissement d'une paroi métallique (2), le procédé comprenant :
le procédé de réglage d'une température de refroidissement d'une paroi métallique (2) selon l'une quelconque des revendications 1 à 6 ; et
une étape de refroidissement pour refroidir la paroi métallique à la température de post-refroidissement cible.
